# EUROPEAN PATENT APPLICATION

(11) **EP 4 807 226 A1**
(43) Date of publication of application: **16.09.2026**
(21) Application number: 25163307.9
(22) Date of filing: 12.03.2025
(51) Int. Cl.: F16K 31/00, F24D 19/00, F24F 11/41

(54) **ANTIFREEZE VALVE DEVICE**

(71) Applicant: ESBE AB, 333 75 Reftele (SE)
(72) Inventor: Bengtsson, Dan, 333 93 Skeppshult (SE)
(74) Representative: AWA Sweden AB

(57) **Abstract**

The present disclosure relates to an antifreeze valve device (100) comprising: a valve body (10), wherein the valve body comprises a fluid chamber (15); a drain outlet (2); a first actuator (20) operable based on a fluid temperature of a liquid operating fluid; a second actuator (30) operable based on an ambient temperature of an external environment of the valve body (10); and a closing member (26) for closing the drain outlet (2), wherein the drain outlet (2) and the closing member (26) are arranged spaced apart from said fluid chamber (15), wherein the first actuator (20) is configured to cause the closing member (26) to disengage from the drain outlet (2) such to open the drain outlet (2) when the fluid temperature is below a first calibration temperature value, and wherein the second actuator (30) is configured to cause an engagement member (36) to engage with the first actuator (20) or the closing member (26) such to prevent the drain outlet (2) from opening when the fluid temperature is below said first calibration temperature value and the ambient temperature is above a second calibration temperature value.

## Description

### Technical field

The present disclosure relates to a valve device, in particular an antifreeze valve device for use in a heating system, a cooling system, a combined heating and/or cooling system, etc. The present disclosure further relates to use of such valve device.

### Background

Antifreeze valves are known in the art for preventing freezing in systems configured to circulate a fluid, such as water. The antifreeze valve devices are typically arranged within said system and configured to drain the fluid when there is a risk that the fluid will freeze. By draining the fluid before it freezes, damages to the system, such as damages to the pipes wherein the fluid circulates, can be avoided.

There are known antifreeze valves in the art that includes an actuator configured to open or close a drain outlet of the valve based on the fluid temperature. Thus, when the fluid temperature is close to freezing temperature, the actuator is configured to open the drain outlet, in order to drain the fluid and prevent freezing.

However, when the actuator operates based on the fluid temperature, there is a risk of unnecessarily draining, in particular in cases when the fluid temperature is low and the external environment temperatures are high, thus the risk for freezing being very low or nonexisting. It is therefore desirable to provide an antifreeze valve that minimizes the risk of unnecessarily draining.

EP 4 006 393 relates to an antifreeze valve unit that aims to avoid that the antifreeze valve opens although there is no probability of breakage of pipes in view of high external temperatures and the fluid circulation.

Another problem with antifreeze valves in the art is the risk of contaminations, deposits or the like damaging the valve, and leading to reduced reliability over time.

Thus, it is desirable to provide an antifreeze valve with high reliability over time. It is also desirable that the antifreeze valve device is simple in construction and allow for a safe, efficient and a reliable antifreeze function.

EP 2 182 261 relates to an antifreezing valve device with an object to provide a constructionally simple and easy to assemble antifreezing valve, and with the object to have a high degree of reliablity over time.

There is a desire to furthe improve on the efficiency and/or reliability of the antifreeze function of antifreeze valve devices. There is also a desire to further improve on the cost-effectiveness of antifreeze valve devices.

### Summary

Thus, it is an object of the present disclosure to provide an improved antifreeze valve device, more specifically to provide an improved antifreeze valve device which minimizes unnecessarily draining. Further objects include providing an improved antifreeze valve device with high efficiency and/or high reliability. Furthermore, it is an object to provide an improved antifreeze valve device being simple in construction and cost-effective.

The invention is defined by the appended independent claims. Embodiments are set forth in the appended dependent claims and in the following description and drawings.

According to a first aspect, there is provided an antifreeze valve device comprising: a valve body, wherein the valve body comprises a fluid chamber; a drain outlet; a first actuator operable based on a fluid temperature of a liquid operating fluid; a second actuator operable based on an ambient temperature of an external environment of the valve body; and a closing member for closing the drain outlet. The drain outlet and the closing member are arranged spaced apart from said fluid chamber. The first actuator is configured to cause the closing member to disengage from the drain outlet such to open the drain outlet when the fluid temperature is below a first calibration temperature value. The second actuator is configured to cause an engagement member to engage with the first actuator or the closing member such to prevent the drain outlet from opening when the fluid temperature is below said first calibration temperature value and the ambient temperature is above a second calibration temperature value.

Thus, when the fluid temperature is below a first calibration temperature value and the ambient temperature is above a second calibration temperature value, the engagement member can be seen to contact the first actuator.

Consequently, the first actuator and the second actuator may operate in series to prevent draining of the operating fluid through the drain outlet when the ambient temperature is above a second calibration temperature value.

Thus, when the fluid temperature is below said first calibration temperature value and the ambient temperature is above a second calibration temperature value, the second actuator can be configured to cause the engagement member to engage with the first actuator such to prevent the closing member from disengaging from the drain outlet, thereby preventing the drain outlet from opening. Thus, the engagement member may engage indirectly with the closing member such to prevent the drain outlet from opening.

Alternatively, the engagement member may engage with the closing member such to prevent the closing member from disengaging from the drain outlet. Thus, the engagement member may engage directly with the closing member such to prevent the drain outlet from opening. Thus, when the fluid temperature is below a first calibration temperature value and the ambient temperature is above a second calibration temperature value, the engagement member can be seen to contact the closing member. Consequently, the second actuator and the closing member may operate in series to prevent draining of the operating fluid through the drain outlet when the ambient temperature is above a second calibration temperature value.

The antifreeze valve device according to the above is suitable for use in a system operating with a liquid operating fluid, such as for example water. Said system may for example be a heating system, a cooling system, a combined heating and/or cooling system. Systems wherein the antifreeze valve device may be used may include, but are not limited to air conditioning systems, heat pump systems, etc. The antifreeze valve device may typically be connected to pipe(s) in which the operating fluid of the system circulates.

The antifreeze valve device according to the above minimizes unnecessarily draining. Furthermore, the antifreeze valve device according to the above allows for efficient opening/closing of the drain outlet, and high reliability. Furthermore, the antifreeze valve device according to the above enables construction.

The closing member is configured to close the drain outlet when in a closing position. Thus, when the closing member is in a closing position, the closing member is adapted to engage with the drain outlet such to close and seal the drain outlet, thereby preventing draining of the operating fluid through said drain outlet.

The drain outlet is seen as open when at least a partial liquid flow is allowed through the drain outlet. Thus, the closing member and drain outlet is seen as disengaged when at least a partial liquid flow is allowed through the drain outlet.

The drain outlet may comprise at least one sealing element. Thus, when the closing member engages with said at least one sealing element of the drain outlet such to seal against one another, the drain outlet is closed. Alternatively, or additionally, the closing member may comprise at least one sealing element.

The first and second actuators may be coaxially arranged with respect to a first axis of the valve body.

The first actuator can be seen to be arranged at an axial position located beneath the second actuator, as seen along a first axial direction, and as seen when oriented in a mounting position, the orientation it has when mounted in a system as described above. "A first axial direction" can be understood as a direction substantially parallel to the first axis.

The drain outlet can be seen to be arranged at an axial position located beneath said fluid chamber, as seen along the first axial direction, and as seen when oriented in a mounting position. In other words, the drain outlet can be seen to be arranged downstream the fluid chamber, as seen along the first axial direction. Further, the drain outlet can be seen to be arranged at an axial position located beneath the first actuator. In other words, the drain outlet can be seen to be arranged downstream the first actuator, as seen along the first axial direction. Consequently, the drain outlet can be arranged in indirect connection with the fluid chamber.

The closing member may be movable along the first axial direction. The closing member may be movable through said drain outlet.

The fluid chamber is adapted for passage of the operating fluid through the valve body when in use. Thus, when arranged in a system, such as a system as mentioned above, the fluid chamber is configured to allow the operating fluid to flow through said fluid chamber. The fluid chamber can be seen to extend along a second axis, said second axis being perpendicular to the first axis. Thus, the fluid chamber can be seen to extend along a second axial direction, said second axial direction being perpendicular to the first axial direction.

The first actuator may partly extend into the fluid chamber. Thereby, the reliability can further be improved. The first actuator may extend into the fluid chamber from a bottom portion of the fluid chamber. The bottom portion being a lower portion of the fluid chamber as seen when in mounting position.

At least a portion of a temperature-sensing member of the first actuator may extend into the fluid chamber. A portion of the temperature-sensing member corresponding to at least 50 %, preferably at least 75 % or at least 80 %, more preferably at least 90 % of a total axial extent of the temperature-sensing member, as seen along the first axial direction, may be arranged to extend in the fluid chamber. The whole temperature-sensing member may be arranged in the fluid chamber.

Further, the engagement member may at least partly extend into the fluid chamber. The engagement member may extend into the fluid chamber from a top portion of the fluid chamber. The top portion being an upper portion of the fluid chamber, as seen when in mounting position.

Consequently, the first actuator and the engagement member may extend into the fluid chamber from opposite sides of the fluid chamber, as seen along the first axial direction.

The engagement member may be configured to engage with the first actuator in the fluid chamber.

Thus, when the ambient temperature is above a second calibration temperature value, a portion of the engagement member and a portion of the first actuator can be seen to be in contact and be located inside of the fluid chamber.

The engagement member may be connected to a first end portion of the second actuator. Alternatively, the engagement member may be integrally formed with the first end portion of the second actuator.

Thus, the engagement member may be formed as a separate part connected to the second actuator. For example, the engagement member may be formed as a separate part and connected to a first end portion of the second actuator. For example, the engagement member may be connected to a rod of the second actuator. Alternatively, the engagement member may form part of the second actuator. For example, the engagement member may be an integrated part of a protruding portion of the second actuator, such as a rod. In such case, the engagement member may form an end portion of the protruding portion.

Further, the closing member can be connected to a first end portion of the first actuator. Alternatively, the closing member can be integrally formed with the first end portion of the first actuator.

Thus, the closing member may be formed as a separate part connected to the first actuator. For example, the closing member may be formed as a separate part and connected to a first end portion of the first actuator. For example, the closing member may be connected to a rod of the first actuator. Alternatively, the closing member may form part of the first actuator. For example, the closing member may be an integrated part of a protruding portion of the first actuator, such as a rod. In such case, the closing member may form an end portion of the protruding portion.

Further, the first actuator may be movably arranged along a first axial direction of the valve body. Thus, the first actuator may be movable between a first axial position and a second axial position, as seen along the first axial direction. The actuator as a whole can be movable. Thus, all parts of the actuator may be moved as one unit between said first and second axial position.

The engagement member may be configured to, when the ambient temperature is above the second calibration temperature value, exert a downward force on the first actuator such to push the first actuator downwards, as seen along the first axial direction. Thereby, the opening of the drain outlet can be prevented, even when the fluid temperature is below said first calibration temperature value.

Thus, the engagement member can be configured to exert a downward force on the first actuator such to push the first actuator as a whole downwards, as seen along the first axial direction. Consequently, the engagement member can be configured to exert a downward force on the first actuator such to move the first actuator from a first axial position to a second axial position, as seen along the first axial direction. As a result, the closing member being connected to the first actuator, or integrally formed with the first actuator, will also be moved in a downward direction. Thus, the closing member can be prevented from disengaging from the drain outlet.

As an alternative, according to an alternative embodiment wherein the engagement member is configured to engage directly with the closing member, the engagement member may be configured to, when the ambient temperature is above the second calibration temperature value, exert a downward force on the closing member such to push the closing member downwards, as seen along the first axial direction. This in order to prevent opening of the drain outlet. The first actuator as a whole may be movably arranged, or alternatively, only a portion of the first actuator may be movably arranged. For example, only a rod of the first actuator may be movably arranged along the first axial direction.

Further, the antifreeze valve device may comprise a first casing. The drain outlet may be formed as an opening in said first casing. The closing member may be movable through said opening. The first casing can be seen to at least partly enclose an inner space.

The closing member can be movable along the first axial direction. At least one sealing element can be provided at said opening. When the closing member engages with said at least one sealing element such to seal against one another, the drain outlet is closed.

Further, the antifreeze valve device may comprise an inner casing part. The inner casing part can be arranged on an interior side of the first casing of the antifreeze valve device. The inner casing part may abut an inner surface of the first casing. The inner casing part may be arranged adjacent said drain outlet. The inner casing part may comprise an opening. The opening may be aligned with the opening of the first casing. Thus, the opening of the inner casing part may be aligned with the drain outlet. Thus, the closing member may be movable through said opening of the inner casing part. The inner casing part can be adapted to abut against at least one sealing element of the drain outlet. The inner casing part may be adapted to hold the at least one sealing element of the drain outlet. The inner casing part allows for an efficient sealing of the drain outlet.

Further, the first actuator and the second actuator may be coaxially arranged with respect to a first axis of the valve body. The first actuator may comprise a first temperature-sensing member and the second actuator may comprise a second temperature-sensing member. The first temperature-sensing member and the second temperature-sensing member may be arranged on opposite sides of a central second axis of the fluid chamber, the second axis being perpendicular to the first axis. The first temperature-sensing member may for example be a first thermostatic wax member. The second temperature-sensing member may for example be a second thermostatic wax member. The second axis may be seen as an axis of symmetry of the fluid chamber.

Further, the valve body of the antifreeze valve device may comprise a fluid inlet and a fluid outlet.

The fluid inlet can be seen to open into said fluid chamber. The fluid outlet being a different outlet than said drain outlet.

The fluid inlet and fluid outlet can be coaxially arranged with respect to the second axis. Thus, the fluid chamber can be seen to extend along a second axial direction, between the fluid inlet and the fluid outlet.

The fluid inlet can be adapted for connection to a fluid system in which the antifreeze valve device is to be arranged to prevent freezing of the operating fluid. For example, the fluid inlet can be adapted for connection to a pipe of a fluid system.

In similar, the fluid outlet can be adapted for connection to a fluid system in which the antifreeze valve device is to be arranged to prevent freezing of the operating fluid. For example, the fluid outlet can be adapted for connection to a pipe of a fluid system.

Further, the antifreeze valve device may comprise a first spring arranged in connection with the first actuator.

The first spring can be seen to be arranged beneath said fluid chamber, as seen along the first axial direction, and as seen when oriented in a mounting position. The first spring can be arranged to urge the closing member into an open position.

Further, the antifreeze valve device may comprise a second spring arranged in connection with the second actuator.

The second spring can be seen to be arranged above said fluid chamber, as seen along the first axial direction, and as seen when oriented in a mounting position. The second spring can be configured to compress when the engagement member exerts a downward force on the first actuator. For example, when the first actuator has been moved downwardly along the first axial direction to its lower end position, and the protruding portion of the second actuator extends further as a result of increasing ambient air temperature, a tension may be seen between the first and second actuators. In such case, the second spring can relieve said tension, thus protecting the valve device from wear. The first and second springs can be arranged on opposite sides of said fluid chamber.

The first calibration temperature value may be set to a temperature value within the range of 2-5°C, preferably within the range of 2-4°C or within the range of 2-3°C. For example, the first calibration temperature value may be set to 3°C. Consequently, when the fluid temperature of the liquid operating fluid is below 3°C, the first actuator may be configured to cause the closing member to disengage from the drain outlet such to open the drain outlet.

The second calibration temperature value may be set to a temperature value within the range of 4-8°C, preferably within the range of 4-6° or within the range of 4-5°C. For example, the second calibration temperature value may be set to 5°C. Consequently, when the ambient temperature of the antifreeze valve device is above 5°C, the second actuator may be configured to cause the engagement member to engage with the first actuator or the closing member. Thereby the engagement member may directly or indirectly move the closing member in a downward direction, as seen along the first axial direction. The closing member may be moved from an open position of the drain outlet to a closed position of the drain outlet. Alternatively, the closing member may be moved from one closed position to another closed position.

According to a second aspect, use of an antifreeze valve device according to the first aspect is provided for preventing freezing of an operating fluid in a heating and/or cooling system.

### Brief Description of the Drawings

Embodiments of the present solution will now be described, by way of example, with reference to the accompanying schematic drawings in which:
Fig. 1 is a schematic view of one embodiment of an antifreeze valve device wherein the drain outlet is open.
Fig. 2 is a schematic view of one embodiment of an antifreeze valve device wherein the drain outlet is in a first closed position.
Fig. 3 is a schematic view of one embodiment of an antifreeze valve device wherein the drain outlet is in a second closed position.
Fig. 4 is a schematic view of one embodiment of an antifreeze valve device wherein the drain outlet is in a third closed position.
Fig. 5 is an exploded view of the antifreeze valve device as illustrated in Figs 1-4.

### Detailed Description

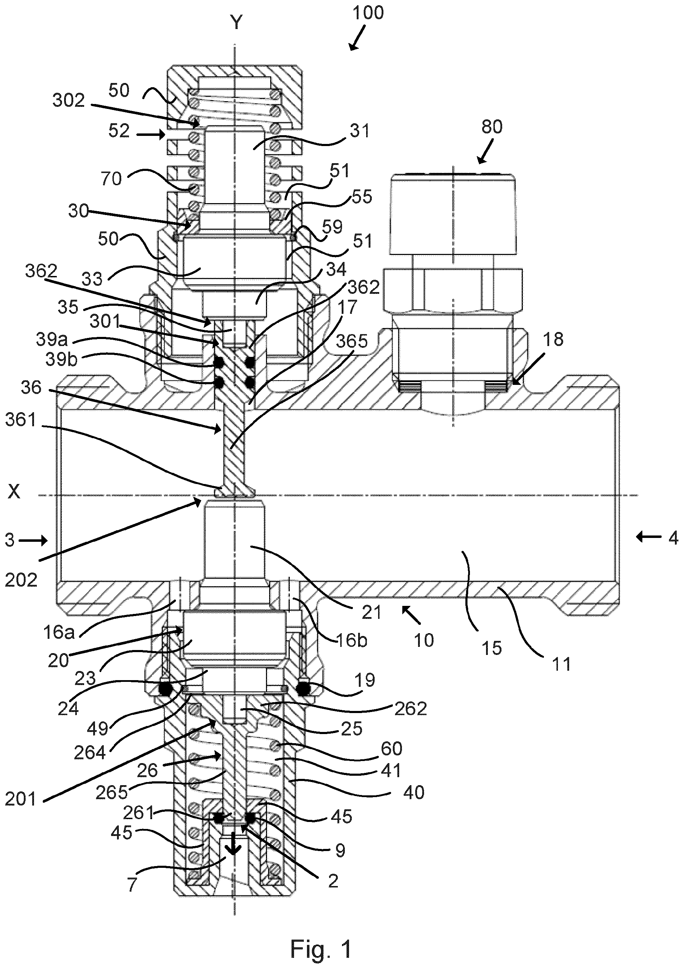

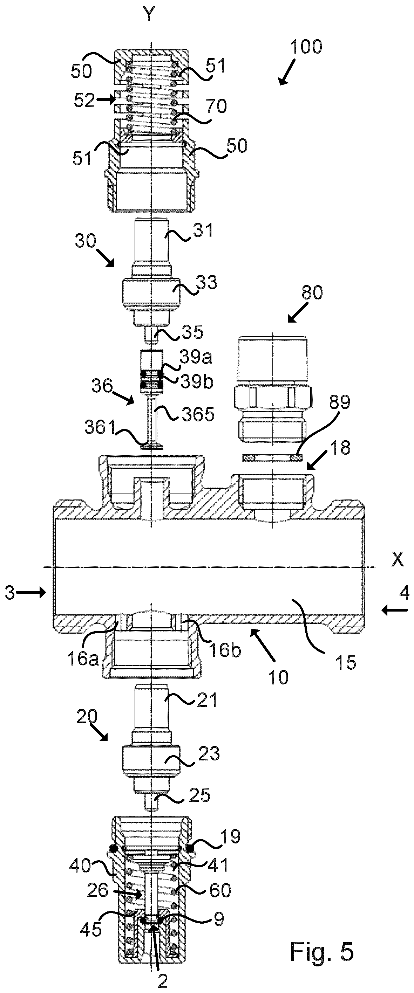

With reference to Figs 1-5 an antifreeze valve device will be described. As illustrated in Figs 1-5, the antifreeze valve device 100 comprises a valve body 10. The valve body 10 may be formed of any suitable material, such as for example steel, brass, composite, iron, or any compound thereof. The valve body 10 can comprise a wall portion 11 at least partly enclosing an inner space. The inner space can form a fluid chamber 15. The fluid chamber 15 is adapted for passage of the operating fluid through the valve body 10 when in use. The fluid chamber 15 can be seen to extend along a second axial direction X, said second axial direction being perpendicular to a first axial direction Y. According to the antifreeze valve device 100 as illustrated in Figs 1-5, the fluid chamber 15 may have a substantially circular cross sectional area. However, it is understood that other geometrical cross sectional shapes are also possible.

Further, a fluid inlet 3 can be arranged to open into the fluid chamber 15. The fluid inlet can be adapted for connection to a fluid system in which the antifreeze valve device is to be arranged to prevent freezing of the operating fluid. Consequently, when in use, an operating fluid may be delivered through the fluid inlet 3 into the fluid chamber 15. Further, a fluid oulet 4 can be arranged from the fluid chamber 15. The fluid outlet 4 can be adapted for connection to a fluid system in which the antifreeze valve device is to be arranged to prevent freezing of the operating fluid. Optionally, and as illustrated in Figs 1-5, the fluid inlet 3 and fluid outlet 4 can be coaxially arranged with respect to a second axis that extend along the second axial direction X. However, it is understood that other configurations and locations of the inlet and outlet respectively are possible. For example, the fluid inlet 3 as illustrated in Figs 1-5, may instead be configured as a fluid outlet and the fluid outlet 4 may instead be configured as a fluid inlet.

As illustrated in Figs 1-5, the antifreeze valve device 100 further comprises a first actuator 20. The first actuator 20 is configured to operate based on a fluid temperature of the operating fluid. The first actuator may extend between a first end, and an opposite second end of the first actuator, as seen along the first axial direction Y. As illustrated in Figs 1-5, the first actuator 20 may be a thermostatic actuator. Although Figs 1-5 illustrate one example of a thermostatic actuator, it is understood that other shapes and configurations of a thermostatic actuator may be possible.

As illustrated in Figs 1-5, the first actuator 20 can comprise a temperature-sensing member 21. Further, the first actuator 20 can comprise a main body portion 23. Further, the first actuator 20 can comprise a body portion 24. Further, the first actuator 20 can comprise a protruding portion 25, such as a rod or piston. The temperature-sensing member 21 can be configured to sense the temperature of the operating fluid. The first actuator 20 can comprise a temperature-sensing material. The temperature-sensing material can be arranged within the temperature-sensing member 21. The temperature-sensing material can expand and contract based on the temperature of the operating fluid, when in use. The temperature-sensing material can for example expand into the main body portion 24. The temperature-sensing material may be a material that changes volume based on temperature. For example, the temperature-sensing material may be a wax-like material. Thus, the temperature-sensing member 21 may be provided in form of thermostatic wax member.

The temperture-sensing member 21 can be calibrated based on a first calibration temperature value. The first calibration temperature value may be set to a temperature value within the range of 2-5°C, preferably within the range of 2-4°C or within the range of 2-3°C. The first calibration temperature value may for example be about 2 °C or about 3°C.

The protruding portion 25 can be movable along the first axial direction Y. The protruding portion 25 can be seen to extend from a first end of the body portion 24. The first end of the body portion 24 being located further away from the fluid chamber 15, than a second opposite end of the body portion 24, as seen along the first axial direction Y. The second end of the body portion 24 can be seen to be arranged in connection with the main body portion 23.

The protruding portion 25 can be extandable and retractable in relation to the body portion 24 of the first actuator 20. The protruding portion 25 may be configured to extend when the operating fluid reaches a temperture above the first calibration temperature value. For example, the first actuator 20 may be configured such that the temperature-sensing material is configured to expand when the operating fluid is greater than the first calibration temperature value, thereby causing the protruding portion 25 to extend. Consequently, the first actuator 20 can comprise one portion of material that is calibrated to expand when the operating fluid reaches a temperature above the first calibration temperature value, thereby forcing the protruding portion 25 downwards, as seen along the first axial direction Y. The protruding portion 25 may be configured to retract when the operating fluid reaches a temperature below the first calibration temperature value. The axial extent of the protruding portion 25, as seen along the first axial direction, may increase as a function of an increasing temperature of the operating fluid. Thus, the extent may vary depending on the temperature of the operating fluid.

The protruding portion 25 may present a first end portion 201 of the first actuator 20. The temperature-sensing member 21 may present an opposite, as seen along the first axial direction, second end portion 202 of the first actuator 20.

As illustrated in Figs 1-5, the antifreeze valve device 100 further comprises a second actuator 30. The second actuator 30 is configured to operate based on an ambient temperature of an external environment of the valve body 10. The second actuator may extend between a first end, and an opposite second end of the second actuator, as seen along the first axial direction. As illustrated in Figs 1-5, the second actuator 30 may be a thermostatic actuator. Although Figs 1-5 illustrate one example of a thermostatic actuator, it is understood that other shapes and configurations of a thermostatic actuator may be possible.

As illustrated in Figs 1-5, the second actuator 30 can comprise a temperature-sensing member 31. Further, the second actuator 30 can comprise a main body portion 33. Further, the second actuator 30 can comprise a body portion 34. Further, the second actuator 30 can comprise a protruding portion 35, such as a rod or piston. The temperature-sensing member 31 can be configured to sense the temperature of the ambient air. The second actuator 20 can comprise a temperature-sensing material. The temperature-sensing material can be arranged within the temperature-sensing member 31. The temperature-sensing material can expand and contract based on the temperature of the ambient air of the valve device 100, when in use. The temperature-sensing material can for example expand into the main body portion 34. The temperature-sensing material may be a material that changes volume based on temperature. For example, the temperature-sensing material may be a wax-like material. Thus, the temperature-sensing member 31 may be provided in form of thermostatic wax member.

The temperture-sensing member 31 can be calibrated based on a second calibration temperature value. The second calibration temperature value may for example be set to a temperature value within the range of 4-8°C, preferably within the range of 4-6°C or within the range of 4-5°C. The second calibration temperature value may for example be about 5°C or about 6°C. However, it is understood that a higher second calibration temperature value can be provided if desired. For example, the second calibration temperature value may be set to a temperature value within the range of 8-20°C or 10-15°C.

The protruding portion 35 can be movable along the first axial direction Y. The protruding portion 35 can be seen to extend from a first end of the body portion 34. The first end of the body portion 34 being located closer to the fluid chamber 15, than a second opposite end of the body portion 34, as seen along the first axial direction Y. The second end of the body portion 34 can be seen to be arranged in connection with the main body portion 33.

The protruding portion 35 can be extandable and retractable in relation to the body portion 34 of the second actuator 30. The protruding portion 35 may be configured to extend when the ambient air reaches a temperature above the second calibration temperature value. For example, the second actuator 30 may be configured such that the temperature-sensing material is configured to expand when the ambient air is greater than the second calibration temperature value, thereby causing the protruding portion 35 to extend. Consequently, the second actuator 30 can comprise one portion of material that is calibrated to expand when the ambient air reaches a temperature above the second calibration temperature value, thereby forcing the protruding portion 35 downwards, as seen along the first axial direction Y. The protruding portion 35 may be configured to retract when the ambient air reaches a temperature below the second calibration temperature value. The axial extent of the protruding portion 35, as seen along the first axial direction, may increase as a function of an increasing temperature of the ambient air. Thus, the extent may vary depending on the temperature of the ambient air.

The protruding portion 35 may present a first end portion 301 of the second actuator 30. The temperature-sensing member 31 may present an opposite, as seen along the first axial direction, second end portion 302 of the second actuator 30.

Although Figs 1-5 illustrates one example of a second actuator 30 in form of a mechanical type thermostatic actuator, other types of actuators and configurations are also possible. For example, a second actuator in form of an electrical actuator (not illustrated), may be provided. According to one example, an external sensor (not illustrated) may be arranged to sense the temperature of the ambient air of the valve device 100. Once the sensor detects a temperature that is greater than the second calibration temperature value, a signal may be sent to the second actuator, causing the second actuator to extend a protruding portion, such as a rod or a piston. The electrical actuator may be controlled by a controller. According to another example (not illustrated) a second actuator in form of an electrical type thermostatic actuator, also referred to as an electrothermal actuator, may be provided. Expansion of the temperature-sensitive material may than occur based on a signal sent from an external sensor (not illustrated) once the sensor detects a temperature that is greater than the second calibration temperature value.

As illustrated in Figs 1-4, the first actuator 20 and second actuator 30 may be coaxially arranged with respect to a first axis of the valve body 10, said first axis extending along the first axial direction Y. The first actuator 20 can be seen to be arranged at an axial position located beneath the second actuator 30, as seen along the first axial direction, and as seen when oriented in a mounting position.

As illustrated, the first main body portion 23 of the first actuator 20 and the second main body portion 33 of the second actuator 30 may be arranged on opposite sides of the fluid chamber 15, as seen along the first axial direction Y. Further, as also illustrated, the first temperature-sensing member 21 of the first actuator 20 and the second temperature-sensing member 31 of the second actuator 30 can be arranged on opposite sides of a central axis of the fluid chamber 15, the central axis extending along the second axial direction X.

The temperature-sensing member 21 may be arranged such to extend into the fluid chamber 15. As illustrated in Figs 1-4, the whole temperature-sensing member 21 may be arranged inside the fluid chamber 15. However, although not illustrated, only a part of the temperature-sensing member 21 may be arranged in the fluid chamber 15.

As illustrated in Figs 1-4, the first actuator 20 may be at least partly housed in the valve body 10. Further, the first actuator 20 may be partly housed by a first casing 40. The first casing can at least partly enclose an inner space 41. The inner space 41 may have a substantially circular cross-sectional area. However, it is understood that other geometrical cross-sectional shapes are also possible. The first casing 40 may be permanently or detachably attached to the valve body 10. The first casing 40 may be attached at a lower portion of the valve body 10, as seen along the first axial direction Y, and as seen when oriented in a mounting position. The first casing 40 may be formed of any suitable material such as for example steel, brass, composite, iron, or any compound thereof.

At least one sealing element 19 can be provided to provide a seal between the valve body 10 and the first casing 40. The sealing element 19 may be formed of any adequate elastic material, such as rubber. The sealing element 19 may for example be provided in form of a flat ring or an O-ring.

Further, a retaining ring 49 may be provided at an inner side of the first casing 40. A retaining ring can enable the mounting of different components of the antifreeze valve device. For example, the retaining ring 49 can enable mounting the first casing 40, the inner casing part 45, the sealing elements 9, 19, the first spring 60 and/or the closing element 26 together. The retaining ring can enable keeping the components in a desired position.

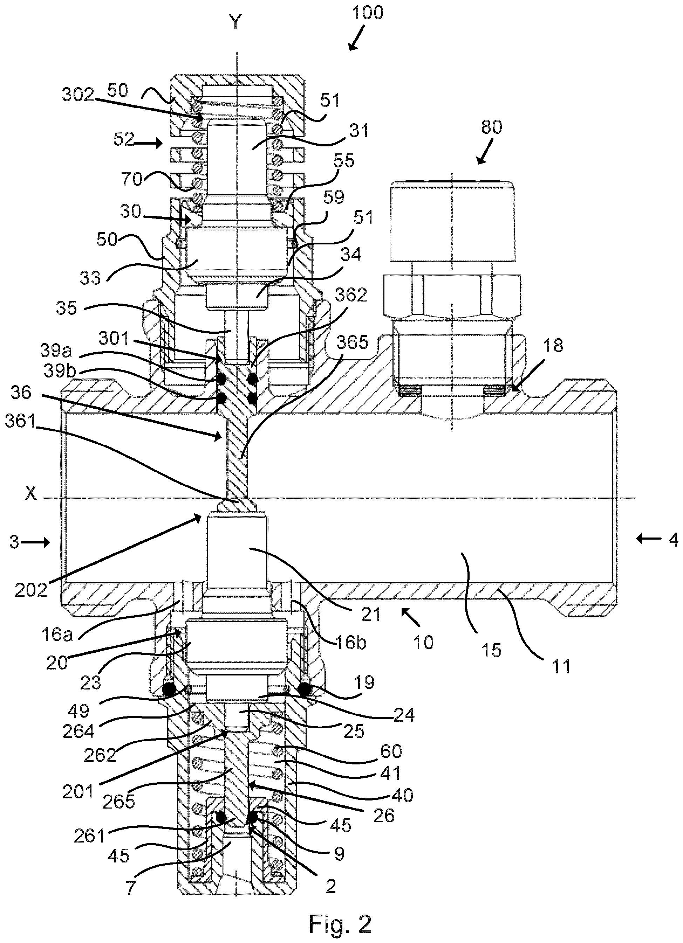

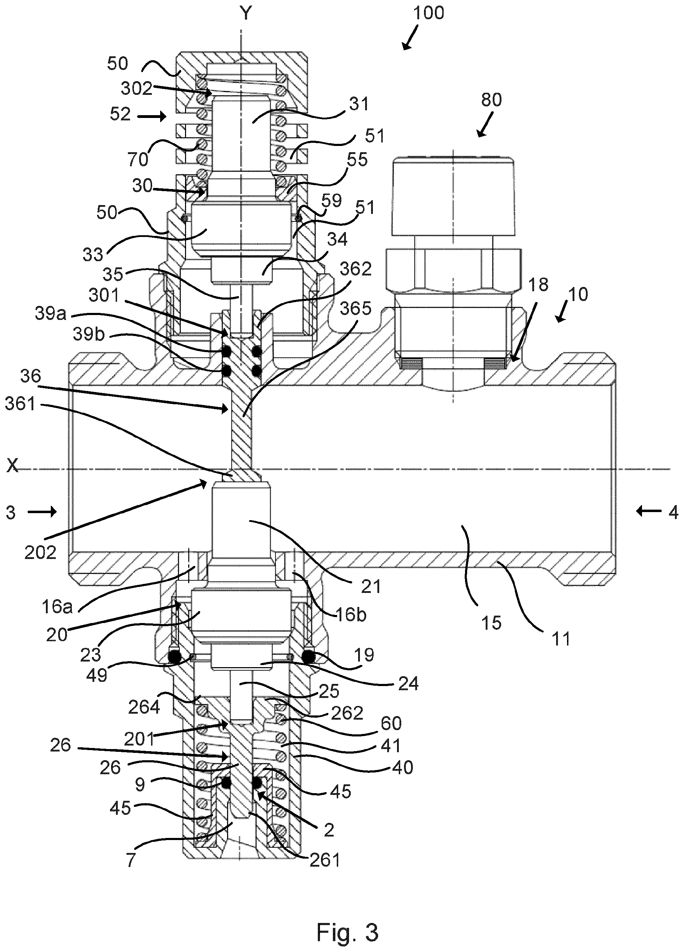

The first actuator 20 may be movably arranged along the first axial direction Y. The first actuator 20 may be movably supported in the valve body 10 and/or first casing 40, for example by any suitable guide means. The first actuator 20 may be movable between a first axial position and a second axial position, as seen along the first axial direction Y. For example, Fig. 1 can be seen to represent a first axial position of the first actuator 20. Fig. 2 and Fig. 3 can be seen to represent a second axial position of the first actuator 20. The first axial position as illustrated in Fig. 1 may correspond to a first axial end position of the first actuator 20. Further, the second axial position as illustrated in Figs. 2-3 may correspond to a second axial end position, opposite to the first axial end position, as seen along the first axial direction Y.

Further, as also illustrated in Figs 1-4, the second actuator 30 may be at least partly housed in the valve body 10. Further, the second actuator 20 may be at least partly housed by a second casing 50. The second casing 50 can be seen to a at least partly enclose an inner space 51. The inner space 51 may have a substantially circular cross-sectional area. However, it is understood that other geometrical cross-sectional shapes are also possible. The second casing 50 may be permanently or detachably attached to the valve body 10. The second casing 50 may be attached at an upper portion of valve body 10, as seen along the first axial direction Y, and as seen when the valve body being oriented in a mounting position. The second casing 50 may be formed of any suitable material such as for example steel, brass, composite, iron, or any compound thereof.

The second casing 50 may comprise at least one opening 52. As illustrated in Figs 1-5, a plurality of openings 52 may be provided. The at least one opening 52 may be provided as a recess or an aperture extending at least partly along the circumference of the casing 50. The at least one opening 52 may extend 360°, i.e. along the whole circumference. The at least one opening 52 allows ambient air into the inner space 51. Thus, the at least one opening 52 are provided for allowing air into contact with the second actuator 30, more specifically into contact with the temperature-sensing member 31 of the second actuator 30.

The second actuator 30 may be movably arranged along the first axial direction Y. The second actuator 30 may be movably supported in the valve body 10 and/or second casing 50, for example by any suitable guide means. The second actuator 30 may be movable between a first axial position and a second axial position, as seen along the first axial direction Y. Thus, the second actuator 30 as a whole can be movable.

Although Figs 1-5 illustrate one example of a housing formed by the valve body 10, the first casing 40 and the second casing 50, it is understood that other shapes and configurations are possible. For example, at least one of the first casing and second casing could be integrally formed with the valve body.

Further, as illustrated in Figs 1-5, the antifreeze valve device 100 comprises a drain outlet 2. The drain outlet 2 is arranged to drain the operating fluid when there is a risk of the operating fluid freezing. Thus, when there is a risk of freezing, the operating fluid may be drained from the fluid chamber 15 and out through the drain outlet 2. The drain outlet 2 may be provided as an opening in a wall portion of said first casing 40. The drain outlet 2 can be arranged at an axial position located beneath said fluid chamber 15, as seen along the first axial direction Y, and as seen when oriented in a mounting position. Further, the drain outlet 2 can be arranged at an axial position located beneath the first actuator 20. Consequently, the drain outlet 2 can be arranged in indirect connection with the fluid chamber 15. An upstream side of the drain outlet 2 may be connected to the inner space 41. A downstream side of the drain outlet 2 may be connected to a drain outlet channel 7. The downstream end of the drain outlet channel 7 may open up to the external environment of the antifreeze valve device 100. Thus, any operating fluid drained through the drain outlet 2 may flow through the drain outlet channel 7 to the outside of the valve device 100.

Further, the antifreeze valve device 100 as illustrated in Figs 1-5 comprises a closing member 26. The closing member 26 is configured for closing the drain outlet 2 when in a closing position. Thus, when the closing member 26 is in a closing position, the closing member 26 is adapted to engage with the drain outlet 2 such to close and seal the drain outlet 2, thereby preventing draining of the operating fluid through said drain outlet 2. As illustrated in Figs 1-5, the drain outlet 2 may comprise at least one sealing element 9. The sealing element 9 may be formed of any adequate elastic material, such as rubber. The sealing element 9 may for example be provided in form of a flat ring or an O-ring. Thus, when the closing member 26 engages with said at least one sealing element 9 of the drain outlet 2 such to seal against one another, the drain outlet is closed. Alternatively, or additionally, the closing member 26 may comprise at least one sealing element (not illustrated).

As illustrated in Figs 1-5, both the drain outlet 2 and the closing member 26 can be arranged spaced apart from the fluid chamber 15. The closing member 26 can be movable along the first axial direction Y. As illustrated in Figs 2-4, the closing member 26 can be movable through the drain outlet 2. Thus, the closing member 26 may be movable passed said sealing element 9. Consequently, when in a closing position, the closing member 26 can be seen to partly extend into the drain outlet channel 7, see Figs 2-4. As illustrated in Figs 2-4, the closing member 26 may be configured to close the drain outlet 2 when the closing member 26 is located in various different axial positions, as seen along the first axial direction Y. Thus, a multiple of closing positions may be possible.

The closing member 26 may be formed of any adequate material such as stainless steel, brass or a plastic material. The material may be a non-corrosive material.

The closing member 26 may extend between a first end, and an opposite second end, as seen along the first axial direction Y. The first end of the closing member 26 being located closer to the drain outlet 2 than the second end of the closing member 26. The closing member may comprise a main body portion 265. The body portion 265 may have a substantially cylindrical shape, as illustrated in Figs 1-5. However, it is understood that other shapes and sizes are possible. The body portion 265 may be provided in form of a rod.

Further, the closing member 26 may comprise a first end portion 261. The first end portion 261 may be tapered. Consequently, the closing member 26 can comprises a tapering end portion, said end portion being the end portion of the closing member 26 located furthest away from the fluid chamber 15. Thus, a first end portion 261 of the closing member 26 may present at least one angled surface. The main body portion 265 may present a first axial width, as seen along the second axial direction X. The first end portion 261 may present a second axial width, as seen along the second axial direction X. The first axial width may be greater than the second axial width. Thus, the main body portion 265 may present a greater diameter than the first end portion 261.

Further, the closing member 26 may comprise a second end portion 262. The second end portion 262 may be located closer to the fluid chamber 15 than the first end portion 261. The second end portion 262 may present a surface 264. The surface 264 may be adapted to abut against the body portion 24 of the first actuator 20 when the protruding portion 25 is in a retracted position, see for example Fig. 1.

As illustrated in Figs 1-5, the closing member 26 can be formed as a separate part connected to the first end portion 201 of the first actuator 20. Thus, the closing member 26 may be attached to the protruding portion 25 of the first actuator. As illustrated, the second end portion 262 of the closing member 26 may be adapted to connect to the protruding portion 25. Although not illustrated, it is however understood that as an alternative, the closing member 26 may be integrally formed with the first end portion 201 of the first actuator. Thus, the protruding portion 25 and closing member 26 may be formed as one part.

Further, as illustrated in Figs 1-5, the antifreeze valve device 100 can comprise an inner casing part 45. The inner casing part can be arranged on an interior side of the first casing 40. The inner casing part 45 may abut an inner surface of the first casing 40. The inner casing part 45 may be arranged adjacent said drain outlet 2. The inner casing part 45 may comprise an opening. The opening may be aligned with the opening of the first casing 40. Thus, the opening of the inner casing part 45 may be aligned with the drain outlet 2. Thus, the closing member 26 may be movable through said opening of the inner casing part 45. The inner casing part 45 can be adapted to abut against the at least one sealing element 9. The inner casing part 45 may be adapted to hold the at least one sealing element 9.

Further, the antifreeze valve device 100 as illustrated in Figs 1-5 comprises an engagement member 36. The engagement member 36 can be arranged such to engage with the first actuator 20 when the fluid temperature is below said first calibration temperature value and the ambient temperature is above said second calibration temperature value. In such case, the engagement member 36 can be configured to exert a downward force on the first actuator 20 such to move the first actuator from a first axial position to a second axial position, as seen along the first axial direction Y, the second axial position being located closer to the drain outlet 2. Consequently, the engagement member 36 may be configured to engage with the first actuator 20 such to prevent the drain outlet 2 from opening. As illustrated in Figs 2-3, the engagement member 36 is configured to engage with the first actuator 20 in the fluid chamber 15.

The engagement member 36 may be formed of any adequate material such as stainless steel, brass or a plastic material. The material may be a non-corrosive material. The engagement member 36 may extend between a first end, and an opposite second end, as seen along the first axial direction Y. The first end of the engagement member 36 being located closer to the first actuator 20 than the second end of the engagement member 36. The engagement member 36 may comprise a main body portion 365. The body portion 365 may have a substantially cylindrical shape, as illustrated in Figs 1-5. However, it is understood that other shapes and sizes are possible. The body portion 365 may be provided in form of a rod. Further, the engagement member 36 may comprise a first end portion 361. The engagement member 36 may present an opposite, second end portion 362. The second end portion 362 may be located further away from the fluid chamber 15 than the first end portion 361.

The main body portion 365 may present a first axial width, as seen along the second axial direction X. The first end portion 361 may present a second axial width, as seen along the second axial direction X. The first axial width may be smaller than the second axial width. Thus, the main body portion 365 may present a smaller diameter than the first end portion 361. The first end portion 361 may present an engagement surface for contacting the first actuator 20 when in an engagement position, see Figs 2-3.

Further, the engagement member 36 may comprise at least one sealing element. As illustrated in Figs 1-5, the engagement member 36 may comprise a first sealing element 39a and a second sealing element 39b. The at least one sealing element 39a, 39b may be arranged to prevent the operating fluid from reaching the inner space 51. The at least one sealing element 39a, 39b may be formed of any adequate elastic material, such as rubber. The at least one sealing element 39a, 39b, may for example be provided in form of a flat ring or an O-ring. As an alternative, the valve body 10 may comprise at least one sealing element (not illustrated) adapted to interact with a surface of the engagement member 36.

As illustrated in Figs 1-5, the engagement member 36 can be formed as a separate part connected to a first end portion 301 of the second actuator. Thus, the engagement member 36 may be attached to the protruding portion 35 of the second actuator. As illustrated, the second end portion 362 of the engagement member 36 may be adapted to connect to the protruding portion 35. Although not illustrated, it is however understood that as an alternative, the engagement member 36 may be integrally formed with the first end portion 301 of the second actuator. Thus, the protruding portion 35 and engagement member 36 may be formed as one part.

Further, as illustrated in Figs 1-4, the engagement member 36 may be arranged such to at least partly extend into the fluid chamber 15. As illustrated in Figs 1-4, the temperature-sensing member 21 of the first actuator 20 and the engagement member 36 may extend into the fluid chamber 15 from opposite sides of the fluid chamber, as seen along the first axial direction Y.

Further, as illustrated in Figs 1-5, the antifreeze valve device 100 can further comprise a first spring 60. The first spring 60 can be arranged in connection with the first actuator 20. The first spring 60 can be seen to be arranged in the inner space 41. The first spring can be arranged beneath the fluid chamber 15, as seen along the first axial direction Y, and as seen when the valve device 100 being oriented in a mounting position. The first spring 60 can be arranged to urge the closing member 26 into an open position of the drain outlet 2, see Fig. 1. Thus, the first spring 60 can be arranged such to urge the closing member 26 to disengage from the sealing element 9 of the drain outlet 2, see Fig. 1.

As also illustrated in Figs 1-5, the antifreeze valve device 100 can further comprise a second spring 70. The second spring 70 can be arranged in connection with the second actuator 30. The second spring 70 can be seen to be arranged in the inner space 51. The second spring can be arranged above said fluid chamber 15, as seen along the first axial direction Y, and as seen when the valve device 100 being oriented in a mounting position. The second spring 70 can be configured to compress when the engagement member 36 exerts a downward force on the first actuator 20, see Figs 2-3. As illustrated in Figs 1-4, the first spring 60 and second spring 70 can be arranged on opposite sides of said fluid chamber 15.

A retaining ring 59 may be provided at an inner side of the second casing 50. A carrier 55 for the second spring 70 may be arranged in the inner space 51. The retaining ring 59 and the carrier 55 can enable preloading of the spring 70 to a predetermined force.

Further, the valve body 10 may comprise at least one drain channel 16. As illustrated in Figs 1-5, a first drain channel 16a and a second drain channel 16b may be provided. The at least one drain channel 16a, 16b may be provided as a channel extending through a wall portion of the valve body 10. The at least one drain channel 16a, 16b may be provided in a lower portion of the valve body 10, as seen along the first axial direction Y, and as seen when the valve device 100 being oriented in a mounting position. The at least one drain channel 16a, 16b may be arranged in direct connection with the fluid chamber 15. For example, the at least one drain channel 16a, 16b may extend from a bottom portion of the fluid chamber 15, in a downward direction along the first axial direction Y. The at least one drain channel 16a, 16b may connect the fluid chamber 15 with the inner space 41. Thus, the at least one drain channel 16a, 16b may be arranged to allow operating fluid to flow from the fluid chamber 15 to the inner space 41, which can be seen to form a second fluid chamber. When the drain outlet 2 is open, the operating fluid can be drained from said second fluid chamber. Thus, when the drain outlet 2 is open, the operating fluid can be drained from the fluid chamber 15 by draining through the at least one drain channel 16a, 16b, through a second fluid chamber and out through the drain outlet 2.

Further, the antifreeze valve device 100 can comprise a vacuum break device 80, see Figs 1-5. Vacuum break devices are known in the art. The vacuum break device 80 may be provided to uphold a desired pressure in the fluid chamber 15. The vacuum break device 80 can uphold a desired pressure in the pipes to which the antifreeze valve device 100 is connected. Thus, the vacuum break device 80 can be provided to enable balancing of a pressure in the pipes of the system in which the antifreeze valve device 100 is mounted. As illustrated, the vacuum break device 80 can be arranged in direct contact with the fluid chamber 15. The vacuum break device 80 may be arranged at an upper portion of valve body 10, as seen along the first axial direction Y, and as seen when the valve body 10 being oriented in a mounting position. The vacuum break device 80 may be screwed to the valve body 10 at a seat 18. The seat 18 may be arranged at an upper portion of the valve body 10. The vacuum break device may comprise a sealing element 89.

An antifreeze valve device 100 as described above may be used in a system for preventing freezing of an operating fluid, such as for example in a heating and/or cooling system. The operating fluid is typically a liquid fluid, such as water. The operating fluid may typically have an operating temperature of 5-60 °C.

When in use, the first actuator 20 is configured to cause the closing member 26 to disengage from the drain outlet 2 such to open the drain outlet 2 when the fluid temperature is below a first calibration temperature value. Further, the second actuator 30 can be configured to cause an engagement member 36 to engage with the first actuator 20 such to prevent the drain outlet 2 from opening when the fluid temperature is below said first calibration temperature value and the ambient temperature is above a second calibration temperature value, see Fig. 2.

When the ambient temperature is above the second calibration temperature value, the engagement member 36 may exert a downward force on the first actuator 20 such to push the first actuator 20 downwards, as seen along the first axial direction Y. Thereby, the opening of the drain outlet 2 can be prevented, even when the fluid temperature is below said first calibration temperature value, see Fig. 2. Thus, the engagement member 36 can be configured to exert a downward force on the first actuator 20 such to push the first actuator as a whole downwards, as seen along the first axial direction Y. Consequently, the engagement member 36 can be configured to exert a downward force on the first actuator 20 such to move the first actuator from a first axial position to a second axial position, as seen along the first axial direction Y.

As an alternative to the configuration as illustrated in Figs 1-4, the engagement member 36 may be configured to engage directly with the closing member 26. In such case, the engagement member 36 may be extendable in the first axial direction and parallel with the first actuator (not illustrated). The engagement member may comprise a plurality of legs (not illustrated). Thus, when the engagement member engages with the closing member, the plurality of legs can be seen to be provided along the circumference of the first actuator and extend parallel with the first actuator, along the first axial direction. As another example, the engagement member may present a hollow cylindrical shape (not illustrated). Thus, when the engagement member engages with the closing member, a wall portion of a hollow cylinder can be seen to encircle the first actuator. The wall portion can be seen to extend parallel with the first actuator, as seen long the first axial direction. The engagement member may comprise a circular end portion, the circular end portion adapted to circumference the first actuator. The circular end portion can present an engagement surface adapted to extend along a circumference of the first actuator and adapted for engagement with the closing member.

Consequently, the engagement member may be configured to, when the ambient temperature is above the second calibration temperature value, exert a downward force on the closing member. This in order to prevent opening of the drain outlet 2. The engagement member 36 may block the upward moment urged by the spring 60. The first actuator 20 as a whole may be movably arranged, or alternatively, only a portion of the first actuator may be movably arranged. For example, only a rod of the first actuator may be movably arranged along the first axial direction.

In relation to Figs 1-4, the operation of the antifreeze valve device 100 will now be described in relation to four different exemplifying operating states. In the example, the operating fluid is water. The first calibration temperature value may be pre-set to a temperature value within the range of 2-5°C, preferably within the range of 2-4°C or within the range of 2-3°C. The second calibration temperature value may be pre-set to a temperature value within the range of 4-8°C, preferably within the range of 4-6°C or within the range of 4-5°C. It is understood that depending on the operating fluid, the calibration temperature values may differ. However the operating principles described below may be the same, regardless of type of operating fluid.

A first operating state relates to the case when the following conditions apply:
1a) The operating fluid has a temperature below the first calibration temperature value, as measured in °C, and
1b) The ambient air has a temperature below the second calibration temperature value, as measured in °C.

Fig. 1 illustrates the antifreeze valve device 100 in a first operating state. In this case there is a significant risk of the operating fluid freezing. Thus, in the first operating state, the drain outlet 2 is open to drain the operating fluid, in order to prevent freezing. According to the illustration of Fig. 1, the closing member 26 is disengaged from the sealing element 9, such to allow a flow through the drain outlet 2. Thus, a flow may be allowed along the closing member 26, through the opening of the casing part 45, and through the opening of casing 40 forming the drain outlet 2. As also illustrated in Fig. 1, the first spring 60 urges the closing member 26 upwardly. Further, as illustrated in Fig. 1, the engagement member 36 and the first actuator 20 may be disengaged. As illustrated, the engagement member 36 and the first actuator 20 may not be in contact. Thus, a gap may be provided between the engagement member 36 and the first actuator 20. Although not illustrated, the engagement member 36 and the first actuator 20 may be in contact in the first operating state. The engagement member 36 and the first actuator 20 may be in contact without the engagement member 36 exerting any downward force on the first actuator 20. Thus, although not illustrated, the engagement member 36 and the first actuator 20 may abut in the first operating state. Further, the operating fluid may flow into the space 17. However, the sealing elements 39a, 39a prevents the operating fluid from reaching the inner space 51.

A second operating state relates to the case when the following conditions apply:
2a) The operating fluid has a temperature below the first calibration temperature value, as measured in °C, and
2b) The ambient air has a temperature greater than the second calibration temperature value, as measured in °C.

Fig. 2 illustrates the antifreeze valve device 100 in a second operating state. In this case there is no significant risk of the operating fluid freezing. Thus, the drain outlet 2 is in a first closed position. This to avoid draining and allow the operating fluid to keep flowing through the fluid chamber 15. According to the illustration of Fig. 2, the protruding portion 35 of the second actuator is in an extended position, pushing the engagement member 36 downwards, as seen along the first axial direction Y. Thereby, the engagement member 36 is caused to exert a downward force on the first actuator 20, causing the first actuator to move downward, thereby causing the closing member 26 to reach the first closed position.

As an alternative (not illustrated), the engagement member 36 may be caused to exert a downward force directly on the closing member 26.

The second operating state is typically applicable during the summer, when there is a need for cooling. Thus, the temperature of the operating fluid is typically low and the outside temperature is typically high.

A third operating state relates to the case when the following conditions apply:
3a) The operating fluid has a temperature greater than the first calibration temperature value, as measured in °C, and
3b) The ambient air has a temperature greater than the second calibration temperature value, as measured in °C.

Fig. 3 illustrates the antifreeze valve device 100 in a third operating state. In this case there is no significant risk of the operating fluid freezing. Thus, the drain outlet 2 is in a second closed position. This to avoid draining and allow the operating fluid to keep flowing through the fluid chamber 15. According to the illustration of Fig. 3, both the protruding portion 35 of the second actuator 30 and the protruding portion 25 of the first actuator 20 are in extended positions. In similar with the second operating state, the protruding portion 35 of the second actuator 30 is in an extended position, pushing the engagement member 36 downwards, as seen along the first axial direction Y. Thereby, the engagement member 36 is caused to exert a downward force on the first actuator 20, causing the first actuator to move downward, as seen along the first axial direction Y. As an alternative (not illustrated), the engagement member 36 may be caused to exert a downward force directly on the closing member 26.

The third operating state is typically applicable during the spring and/or autumn, when there is a need for heating. Thus, both the temperature of the operating fluid and the outside temperature can be high.

A fourth operating state relates to the case when the following conditions apply:
4a) The operating fluid has a temperature greater than the first calibration temperature value, as measured in °C, and
4b) The ambient air has a temperature below the second calibration temperature value, as measured in °C.

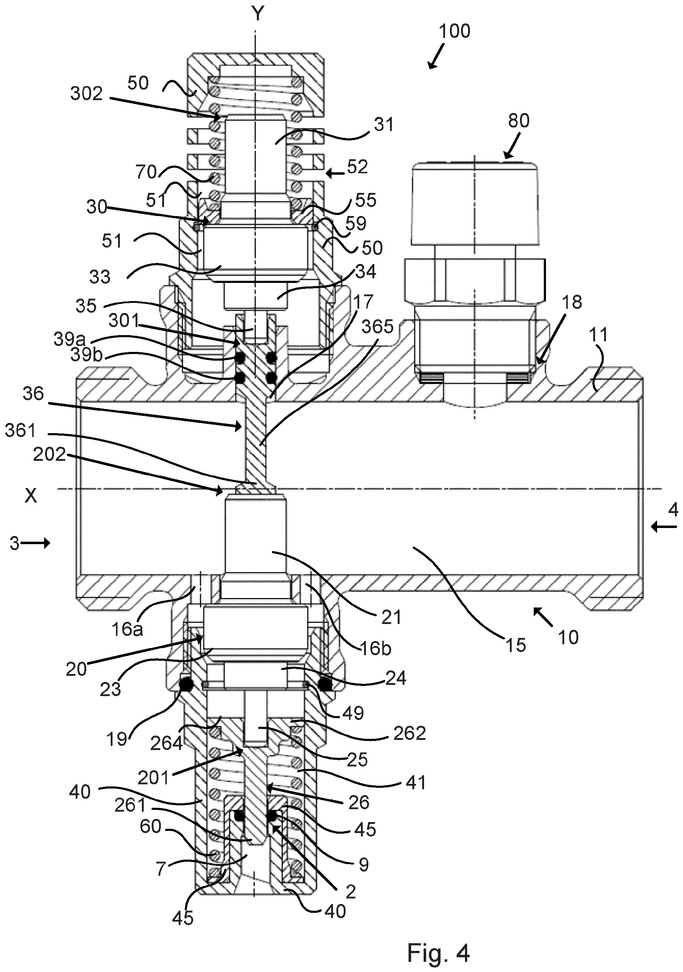

Fig. 4 illustrates the antifreeze valve device 100 in a fourth operating state. In this case there is no significant risk of the operating fluid freezing. Thus, the drain outlet 2 is in a third closed position. This to avoid draining and allow the operating fluid to keep flowing through the fluid chamber 15. According to the illustration of Fig. 4, the protruding portion 25 of the first actuator 20 is in an extended position, thereby pushing the closing member 26 downwards, as seen along the first axial direction Y, into the third closed position. As illustrated in Fig. 4, the engagement member 36 and the first actuator 20 may be in contact with one another. However, as illustrated in Fig. 4, the engagement member 36 is in contact with the first actuator 20 without exerting a downward force on the first actuator 20. Although not illustrated, a gap may be provided between the engagement member 36 and the first actuator 20, in similar with what has been described above in relation to the first operating state. Thus, in the fourth operating state, the engagement member 36 and the first actuator 20 may not be in contact with one another.

The fourth operating state is typically applicable during the winter, when there is a need for heating. Thus, the temperature of the operating fluid is typically high and the outside temperature is typically low.

As exemplified by Figs. 1-4, the axial extent of the protruding portions 25, 35 of the first and second actuators 20, 30 respectively, as seen along the first axial direction Y, can vary depending on temperature. For example, Fig. 1 and Fig. 4 both illustrate examples of operating states wherein the ambient air has a temperature below the second calibration temperature value, as measured in °C. According to the illustrated example of Fig. 1, the ambient air has a lower temperature than the ambient air of the example as illustrated in Fig. 4, resulting in the protruding portion 35 according to Fig. 1 being less extended as compared with Fig. 4.

## Claims

1. An antifreeze valve device (100) comprising:
a valve body (10), wherein the valve body comprises a fluid chamber (15);
a drain outlet (2);
a first actuator (20) operable based on a fluid temperature of a liquid operating fluid;
a second actuator (30) operable based on an ambient temperature of an external environment of the valve body (10); and
a closing member (26) for closing the drain outlet (2),
wherein the drain outlet (2) and the closing member (26) are arranged spaced apart from said fluid chamber (15),
wherein the first actuator (20) is configured to cause the closing member (26) to disengage from the drain outlet (2) such to open the drain outlet (2) when the fluid temperature is below a first calibration temperature value, and
wherein the second actuator (30) is configured to cause an engagement member (36) to engage with the first actuator (20) or the closing member (26) such to prevent the drain outlet (2) from opening when the fluid temperature is below said first calibration temperature value and the ambient temperature is above a second calibration temperature value.

2. The antifreeze valve device (100) according to claim 1, wherein the first actuator (20) partly extends into the fluid chamber (15).

3. The antifreeze valve device (100) according to claim 1 or 2, wherein at least a portion of a temperature-sensing member (21) of the first actuator (20) extends into the fluid chamber (15).

4. The antifreeze valve device (100) according to any one of the preceding claims, wherein the engagement member (36) at least partly extends into the fluid chamber (15).

5. The antifreeze valve device (100) according to any one of the preceding claims, wherein the engagement member (36) is configured to engage with the first actuator (20) in the fluid chamber (15).

6. The antifreeze valve device (100) according to any one of the preceding claims, wherein the engagement member (36) is connected to a first end portion (301) of the second actuator (30), or wherein the engagement member (36) is integrally formed with the first end portion (301) of the second actuator (30).

7. The antifreeze valve device (100) according to any one of the preceding claims, wherein the first actuator (20) is movably arranged along a first axial direction (Y) of the valve body (10).

8. The antifreeze valve device (100) according to any one of the preceding claims, wherein the engagement member (36) is configured to, when the ambient temperature is above the second calibration temperature value, exert a downward force on the first actuator (20) such to push the first actuator (20) downwards, as seen along the first axial direction (Y).

9. The antifreeze valve device (100) according to any one of the preceding claims, further comprising a first casing (40), wherein the drain outlet (2) is formed as an opening in said first casing (40), wherein the closing member (26) is movable through said opening.

10. The antifreeze valve device (100) according to any one of the preceding claims, further comprising an inner casing part (45) arranged on an interior side of a first casing (40) of the antifreeze valve device (100).

11. The antifreeze valve device (100) according to any one of the preceding claims, wherein the first actuator (20) and the second actuator (30) are coaxially arranged with respect to a first axis of the valve body (10),
wherein the first actuator (20) comprises a first temperature-sensing member (21) and the second actuator (30) comprises a second temperature-sensing member (31), and wherein the first temperature-sensing member (21) and the second temperature-sensing member (31) are arranged on opposite sides of a central second axis of the fluid chamber, the second axis being perpendicular to the first axis.

12. The antifreeze valve device (100) according to any one of the preceding claims, wherein the valve body (10) comprises a fluid inlet (3) and a fluid outlet (4).

13. The antifreeze valve device (100) according to any one of the preceding claims, wherein the antifreeze valve device further comprises a first spring (60) arranged in connection with the first actuator (20).

14. The antifreeze valve device (100) according to any one of the preceding claims, wherein the antifreeze valve device further comprises a second spring (70) arranged in connection with the second actuator (30).

15. The antifreeze valve device (100) according to any one of the preceding claims, wherein the first calibration temperature value is set to a temperature value within the range of 2-5°C, preferably within the range of 2-4°C or within the range of 2-3°C.

16. The antifreeze valve device (100) according to any one of the preceding claims, wherein the second calibration temperature value is set to a temperature value within the range of 4-8°C, preferably within the range of 4-6° or within the range of 4-5°C.

17. Use of an antifreeze valve device (100) according to any one of the preceding claims for preventing freezing of an operating fluid in a heating and/or cooling system.
